# EUROPEAN PATENT APPLICATION

(11) **EP 4 769 762 A1**
(43) Date of publication of application: **01.07.2026**
(21) Application number: 25837597.1
(22) Date of filing: 02.07.2025
(51) Int. Cl.: H01M 50/367, H01M 50/383, H01M 50/317, H01M 50/342, H01M 50/375, H01M 50/249

(54) **BATTERY PACK AND VEHICLE INCLUDING SAME**

(30) Priority: 09.07.2024 KR 20240090480
(71) Applicant: LG Energy Solution, Ltd., Seoul 07335 (KR)
(72) Inventor: BAEK, Seung-Ryul, Daejeon 34122 (KR)
(74) Representative: Goddar, Heinz J.
(86) International application number: PCT/KR2025/009433
(87) International publication number: WO 2026/014797

(57) **Abstract**

A battery pack according to the present disclosure may include: a plurality of cell array structures including a plurality of battery cells; a pack case including a bottom member disposed on one side of the plurality of cell array structures, and having a first storage space where the plurality of cell array structures are stored and a second storage space where the cell array structure is not stored, which are formed on the bottom member; and a plurality of venting spaces formed on the bottom member so as to correspond one-to-one with the plurality of cell array structures, wherein a close-contact area is provided on a periphery of the venting space on the bottom member such that the cell array structures is in close contact therewith, and wherein the plurality of venting spaces are isolated from each other in the first storage space, and are isolated from the second storage space.

## Description

### TECHNICAL FIELD

The present disclosure relates to a battery pack and, more specifically, to a battery pack capable of effectively preventing thermal propagation when a thermal event occurs in any cell array structure of the battery pack, and a vehicle including the same.

This application is based on and claims priority from Korean Patent Application No. 10-2024-0090480, filed on July 09, 2024, with the Korean Intellectual Property Office, the disclosure of which is incorporated herein in its entirety by reference.

### BACKGROUND ART

Recently, the demand for portable electronic products such as laptop PCs, video cameras, and mobile phones has rapidly increased, and the development of electric vehicles, energy storage batteries, robots, satellites, and other related technologies has accelerated. As a result, active research on high-performance secondary batteries, which can be repeatedly charged and discharged, is underway

Currently commercialized secondary batteries include nickel-cadmium batteries, nickel-metal hydride batteries, nickel-zinc batteries, and lithium-ion secondary batteries. Among them, lithium-ion secondary batteries are in the spotlight for their advantages of flexible charging and discharging due to almost no memory effect, a very low self-discharge rate, and a high energy density, compared to nickel-based secondary batteries.

These lithium-ion secondary batteries generally use lithium-based oxides and carbon materials as positive and negative electrode active materials, respectively. In addition, the lithium-ion secondary batteries include an electrode assembly in which the positive and negative electrode plates coated with the positive and negative electrode active materials, respectively, are disposed with a separator therebetween, and an exterior case that stores the electrode assembly with an electrolyte in a sealing manner.

Meanwhile, lithium-ion secondary batteries may be classified, depending on the shape of a battery case, into pouch-type secondary batteries in which the electrode assembly is accommodated in a pouch of an aluminum laminate sheet and can-type secondary batteries in which the electrode assembly is accommodated in a metal can. In addition, can-type secondary batteries may be further classified into cylindrical batteries and prismatic batteries depending on the shape of the metal can. These lithium-ion secondary batteries are assembled into a compact structure by overlapping or stacking multiple battery cells themselves or multiple battery cells mounted in cartridges, and then the structures may be electrically connected to configure a battery module or battery pack.

Recently, research and development has been actively conducted on battery packs comprised of a single module or cell assembly, which improves structural rigidity by standing and densely stacking multiple cylindrical battery cells, and a cell frame surrounding the same. In particular, in order to increase the energy capacity, the size of a single module or cell assembly is being increased in terms of its surface area, or the number of single modules or cell assemblies is being increased.

In a battery pack including such a single module or cell assembly, it is important that the venting gas, or the like, be completely discharged to the outside, instead of moving to another space, in order to prevent thermal propagation while securing sufficient discharge paths for venting gas or the like in the event of thermal runaway. In addition, in a case where multiple modules or cell assemblies are provided in the battery pack, it is important that the venting gas discharged from one module does not flow into another module to prevent thermal propagation.

### DISCLOSURE

### Technical Problem

The present disclosure is designed to solve the problems of the related art, and therefore the present disclosure is directed to providing a battery pack capable of completely and smoothly discharging venting gas to the outside when a thermal event occurs, and a vehicle including the same.

In addition, the present disclosure is also to provide a battery pack capable of effectively preventing thermal propagation between battery cells or cell array structures, and a vehicle including the same.

In addition, the present disclosure is also to provide a battery pack capable of effectively preventing venting gas from flowing into components other than the cell array structure, and a vehicle including the same.

In addition, the present disclosure is also to provide a battery pack capable of effectively preventing secondary thermal events from occurring when a thermal event occurs, and a vehicle including the same.

In addition, the present disclosure is also to provide a battery pack capable of preventing venting gas discharged from a specific battery cell from flowing into another battery cell, and a vehicle including the same.

In addition, the present disclosure is also to provide a lightweight battery pack and a vehicle including the same.

In addition, the present disclosure is also to provide a battery pack with improved energy density and a vehicle including the same.

In addition, the present disclosure is also to provide a battery pack with improved productivity and a vehicle including the same.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of cell array structures including a plurality of battery cells; a pack case including a bottom member disposed on one side of the plurality of cell array structures, and having a first storage space where the plurality of cell array structures are stored and a second storage space where the cell array structure is not stored, which are formed on the bottom member; and a plurality of venting spaces formed on the bottom member so as to correspond one-to-one with the plurality of cell array structures, wherein a close-contact area may be provided on the periphery of the venting space on the bottom member such that the cell array structures is in close contact therewith, and wherein the plurality of venting spaces may be isolated from each other in the first storage space, and isolated from the second storage space.

The second storage space may store one or more electrical components.

The battery pack according to the present disclosure may further include a filling member filled in the cell array structure, and the filling member may be in close contact with the close-contact area.

The cell array structure may further include a side frame configured to support and store the battery cells, and the side frame may be in close contact with the close-contact area.

The battery cell may include a venting unit at its bottom, and the venting space may be disposed at the bottom of the battery cell.

The venting space may be formed integrally with the bottom member.

The bottom member may include a first bottom and a second bottom that are spaced apart from each other, and the venting space may be formed between the first bottom and the second bottom.

The venting space may be formed by extrusion-molding the bottom member.

The venting space may have one or more protrusions disposed therein, and the one or more protrusions may form a plurality of venting channels in the venting space.

The cell array structure may further include at least one side structure configured to support and store the battery cells in both directions, and the protrusion may be disposed at a position corresponding to the side structure.

The pack case may further include a venting device communicating with the plurality of venting spaces and the outside.

The venting device may be disposed on a side wall far from the second storage space in the pack case.

The side wall may have a side path provided therein to communicate the venting device and the plurality of venting spaces with each other.

The battery pack according to the present disclosure may further include a sealing member disposed in the close-contact area to seal a gap between the cell array structure and the venting space, which correspond to each other.

The sealing member may include a flame-retardant material.

The battery pack according to the present disclosure may further include a filling member filled in the cell array structure, wherein the filling member may include an extension portion extending from one side of the cell array structure toward the close-contact area, and wherein the extension portion may constitute the sealing member.

In another aspect of the present disclosure, there is provided a vehicle including at least one battery pack according to the present disclosure.

### Advantageous Effects

According to the present disclosure, it is possible to provide a battery pack capable of completely and smoothly discharging venting gas to the outside by a plurality of venting spaces when a thermal event occurs, and a vehicle including the same.

In addition, it is possible to provide a battery pack capable of effectively preventing thermal propagation between battery cells or cell array structures by a plurality of venting spaces, and a vehicle including the same.

In addition, it is possible to provide a battery pack capable of effectively preventing venting gas from flowing into components other than the cell array structure by a plurality of venting spaces, and a vehicle including the same.

In addition, it is possible to provide a battery pack capable of effectively preventing, by a plurality of venting spaces, secondary thermal events from occurring when a thermal event occurs, and a vehicle including the same.

In addition, it is possible to provide a battery pack capable of preventing venting gas discharged from a specific battery cell from flowing into another battery cell by a filling member, and a vehicle including the same.

In addition, it is possible to provide a battery pack capable of more effectively preventing the occurrence of thermal propagation due to venting gas by a sealing member, and a vehicle including the same.

The effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view illustrating a battery pack according to an embodiment of the present disclosure.
FIG. 2 is an overall plan view illustrating a battery pack according to an embodiment of the present disclosure.
FIG. 3 is an exploded perspective view illustrating a battery pack according to an embodiment of the present disclosure.
FIG. 4 is a plan view illustrating a battery pack from which a cell array structure is removed according to an embodiment of the present disclosure.
FIG. 5 is a cross-sectional view taken along line I - I' in FIG. 1.
FIG. 6 is an enlarged cross-sectional view of part A in FIG. 5.
FIG. 7 is an enlarged cross-sectional view of part B in FIG. 5.
FIG. 8 is an exploded perspective view illustrating a cell array structure of a battery pack according to an embodiment of the present disclosure.
FIG. 9 is an enlarged cross-sectional view illustrating a battery cell of a battery pack according to an embodiment of the present disclosure.
FIG. 10 is an enlarged perspective view of a portion of a bottom member of a battery pack according to an embodiment of the present disclosure.
FIG. 11 is a cross-sectional view illustrating a cell array structure of a battery pack according to an embodiment of the present disclosure.
FIG. 12 is an enlarged cross-sectional view of part C in FIG. 5.
FIG. 13 is an exploded perspective view of a battery pack according to another embodiment of the present disclosure.
FIG. 14 is a plan view illustrating a battery pack from which a cell array structure is removed according to another embodiment of the present disclosure.
FIG. 15 is a bottom view illustrating a cell array structure according to another embodiment of the present disclosure.
FIG. 16 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

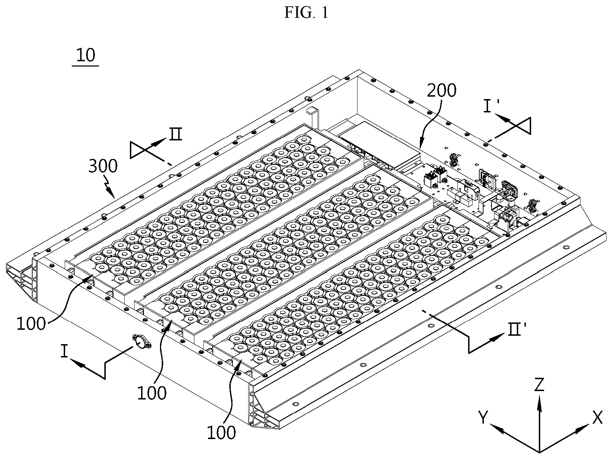

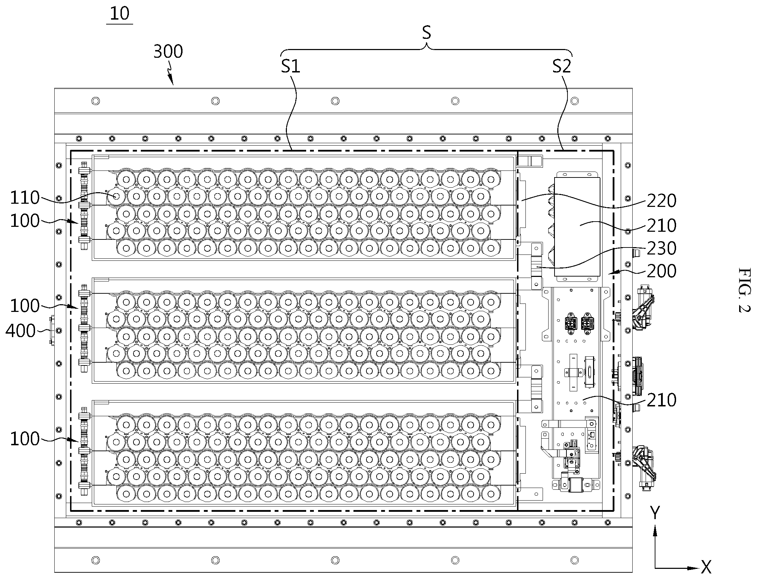

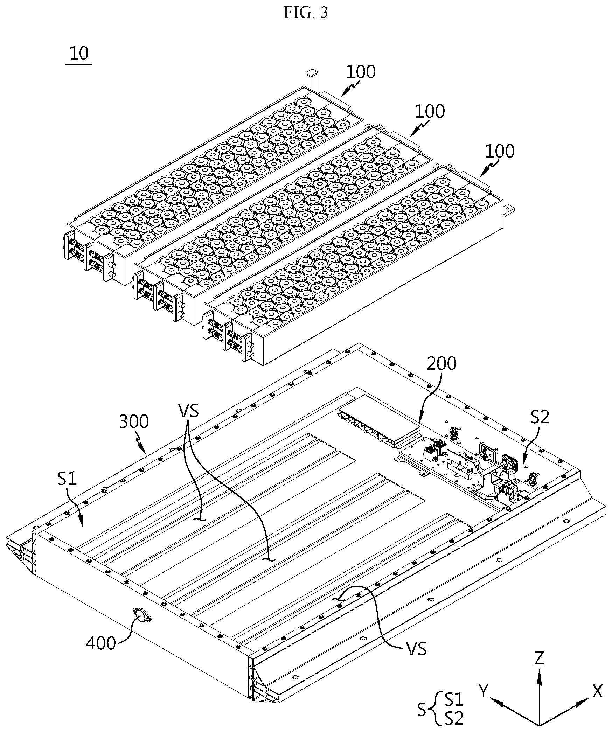

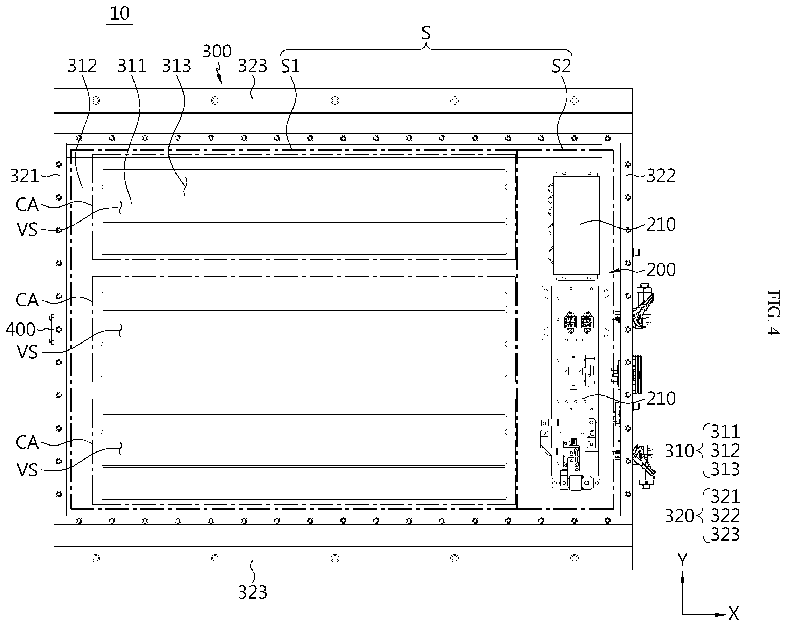

FIG. 1 is an overall perspective view illustrating a battery pack according to an embodiment of the present disclosure, FIG. 2 is an overall plan view illustrating a battery pack according to an embodiment of the present disclosure, FIG. 3 is an exploded perspective view illustrating a battery pack according to an embodiment of the present disclosure, and FIG. 4 is a plan view illustrating a battery pack from which a cell array structure is removed according to an embodiment of the present disclosure.

Referring to FIGS. 1 to 4, a battery pack 10 according to an embodiment of the present disclosure includes a plurality of cell array structures 100, a pack case 300, and a bottom member 310.

The battery pack 10 may be configured in a three-dimensional structure having a predetermined width and length in the X-axis and Y-axis directions, respectively, and a predetermined height in the Z-axis direction. The battery pack 10 may have a structure suitable for mounting to a vehicle body.

The cell array structure 100 may include a plurality of battery cells 110. The battery cell 110 is a secondary battery, and may be configured as a cylindrical secondary battery, a pouch-type secondary battery, or a prismatic secondary battery. Hereinafter, although, in the present embodiment, a plurality of battery cells 110 are described as being provided as cylindrical secondary batteries, the disclosure is not limited thereto, and a pouch-type secondary battery or prismatic secondary battery may be applied to the battery cell 110.

In the cell array structure 100, the plurality of battery cells 110 may be arranged in a horizontal direction parallel to the X-Y plane and perpendicular to the Z-axis direction. The cell array structure 100 may have a predetermined length, width, and height in the X-axis, Y-axis, and Z-axis directions, respectively. The cell array structure 100 may be understood as a single assembly or structure in which a plurality of battery cells 110 are arranged as described above. The battery pack 10 including the cell array structure 100 may be configured in a so-called cell-to-pack structure without including a separate module case, thereby increasing space efficiency and improving energy density. The cell array structure 100 may be configured to have a large area by increasing the number of arranged battery cells 110.

A plurality of cell array structures 100 may be provided in the battery pack 10. The plurality of cell array structures 100 may be disposed in a row along the widthwise direction of the cell array structure 100. For example, the plurality of cell array structures 100 may be disposed in a row along the Y-axis direction.

A storage space S may be formed in the pack case 300 to store components such as the cell array structure 100. That is, the pack case 300 may be configured to store the cell array structure 100 or the like. The storage space S may include a first storage space S1 and a second storage space S2.

The first storage space S1 may be a space in which a plurality of cell array structures 100 are stored. The first storage space S1 may be understood as a space occupied by a plurality of cell array structures 100 in the storage space S. For example, as illustrated in FIG. 2, the first storage space S1 may be understood as a space located on the left side (in the drawing) where a plurality of cell array structures 100 are stored.

The second storage space S2 may be understood as a space where the cell array structure 100 is not stored. That is, the second storage space S2 may be understood as a space not occupied by the plurality of cell array structures 100 and excluding the first storage space S1 from the storage space S. For example, as illustrated in FIG. 2, the second storage space S2 may be understood as a space located on the right side (in the drawing) where the plurality of cell array structures 100 are not stored. The second storage space S2 may store an electric component 200, which will be described later.

As described above, the first storage space S1 and the second storage space S2 may be understood as spaces that are distinguished depending on whether a plurality of cell array structures 100 are stored in the storage space S formed inside the pack case 300 and on the bottom member 310. The first storage space S1 and the second storage space S2 may communicate with or may be connected to each other on the bottom member 310.

The pack case 300 may include the bottom member 310. The bottom member 310 may form a floor inside the pack case 300. The bottom member 310 may be disposed on one side of the plurality of cell array structures 100. The storage space S may be formed on the bottom member 310. For example, the storage space S may be formed above the bottom member 310 (in the +Z direction).

A plurality of venting spaces VS may be formed in the bottom member 310. The venting space VS may be understood as a space through which high-temperature gas, flame, and solid discharges (hereinafter, venting gas VG) released when a thermal event occurs in the battery cell 110 of the cell array structure 100 may flow. The plurality of venting spaces VS may be formed in the bottom member 310. The plurality of venting spaces VS may correspond one-to-one with the plurality of cell array structures 100. For example, as shown in the drawing, when three cell array structures 100 are included in the first storage space S1, three venting spaces VS corresponding to the three cell array structures 100 may be formed in the bottom member 310. As described above, the plurality of cell array structures 100 may all be stored in the first storage space S1, and the plurality of venting spaces VS corresponding to the plurality of cell array structures 100 may also all be provided in a part of the bottom member 310 corresponding to the first storage space S1.

A close-contact area CA may be provided on the bottom member 310. The close-contact area CA may be defined as an area on the bottom member 310 where the cell array structure 100 is in close contact on the periphery of the venting space VS. The cell array structure 100 may come into close contact with the periphery of the corresponding venting space VS, thereby covering the venting space VS. For example, referring to FIG. 2 and FIG. 4, the cell array structure 100 may have a size larger than the venting space VS so as to cover the venting space VS when viewed from the cell array structure 100 (in the Z-axis direction), and the close-contact area CA may be understood as a band-shaped area obtained by excluding the area occupied by the venting space VS from the areas occupied by the cell array structure 100 on the bottom member 310. The close-contact area CA may be provided so as to completely surround the perimeter of the venting space VS.

As the cell array structure 100 is in close contact with the periphery of the venting space VS in the close-contact area CA, the gap between the venting space VS and the cell array structure 100 may be effectively sealed. As a result, the venting space VS may be isolated from the storage space S formed on the bottom member 310. The close-contact area CA may be provided for each cell array structure 100 and each venting space VS.

The plurality of venting spaces VS may be isolated from each other in the first storage space S1. That is, the plurality of venting spaces VS may not communicate with each other. Specifically, as described above, since each venting space VS is isolated from the storage space S by the close-contact area CA, the plurality of venting spaces VS may be isolated from each other in the first storage space S1.

The plurality of venting spaces VS may be isolated from the second storage space S2. That is, the plurality of venting spaces VS may not communicate with the second storage space S2. Specifically, as described above, since each venting space VS is isolated from the storage space S by the close-contact area CA, the plurality of venting spaces VS may also be isolated from the second storage space S2.

In a case where the venting space VS is provided in the battery pack 10, when a thermal event occurs in a specific battery cell 110 of the battery pack 10, the venting gas VG of the relevant battery cell 110 may be discharged to the venting space VS, thereby preventing thermal propagation to an adjacent battery cell 110.

However, in a conventional battery pack 10, the venting gas VG could spread throughout the entire inner space of the battery pack 10, instead of flowing in a limited area of the battery pack 10. As a result, the conventional battery pack 10 is vulnerable to thermal propagation because the venting gas VG may move to a space where an adjacent cell array structure 100 is disposed, and the venting gas VG may spread to other spaces where the cell array structure 100 is not disposed, which may cause fatal damage to other components other than the cell array structure 100.

However, in the battery pack 10 according to the present disclosure, the venting space VS may be independently provided for each cell array structure 100, and all of the venting spaces VS may be sealed by the close-contact area CA, so that even if a thermal event occurs in the battery pack 10, the venting gas VG may only move through a specific path, instead of spreading throughout the entire inner space of the battery pack 10. Furthermore, since the respective venting spaces VS are isolated from each other in the first storage space S1, even if a thermal event occurs in a specific cell array structure 100, the venting gas VG cannot move to another cell array structure 100, so that thermal propagation between the cell array structures 100 may be effectively prevented. In addition, since the venting spaces VS are isolated from the second storage space S2, the venting gas VG generated due to the thermal event cannot reach the components other than the cell array structure 100, so it is possible to effectively prevent damage to the components other than the cell array structure 100 by the venting gas VG. Therefore, the battery pack 10 according to the present disclosure may reliably prevent the occurrence of secondary thermal events since the venting gas VG may only move through the venting space VS even if a thermal event occurs.

One or more electrical components 200 may be stored in the second storage space S2. That is, the first storage space S1 may be a space in which a plurality of cell array structures 100 are stored in the storage space S, and the second storage space S2 may be a space in which one or more electrical components 200, other than the cell array structures 100, are stored in the storage space S.

The electrical components 200 may include, for example, at least one of an electrical unit 210, a CMC (Cell Module Controller) 220, and a busbar 230. The electrical unit 210 may include a BMS (Battery Management System) or BDU (Battery Disconnect Unit) to be described below. The BMS or BDU of the electrical unit 210 may include a plastic material. The electrical unit 210 may include a connector having a plurality of pins formed therein. The CMC 220 may be disposed at the outermost side of the cell array structure 100. The busbar 230 may be understood as an electrical connecting member that electrically connects different cell array structures 100 to each other.

In the conventional battery pack 10, when a thermal event occurs, venting gas VG may flow into the electrical components 200. In this case, the plastic part of the electrical unit 210, such as the BMS or BDU, may melt and cause contact between conductors, resulting in a short circuit, which could lead to an unexpectedly larger fire. In addition, even if foreign substances included in the venting gas VG flow into the connector of the electrical unit 210, the foreign substances may flow between pins that are very narrowly disposed, thereby causing a short circuit.

The battery pack 10 according to the present disclosure may store one or more electrical components 200 described above in the second storage space S2 that is isolated from the venting space VS, so that even if a thermal event occurs in the battery pack 10, the venting gas VG may be fundamentally prevented from flowing into the electrical components 200, thereby solving all of the problems of the conventional battery pack 10 as described above.

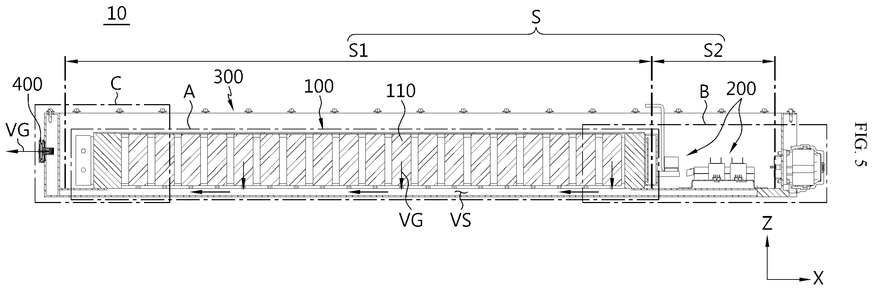

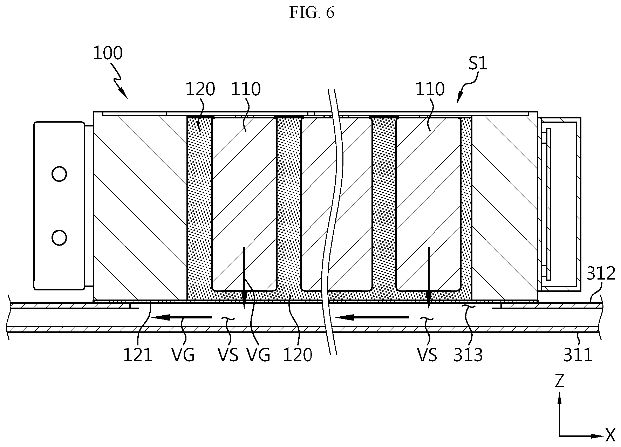

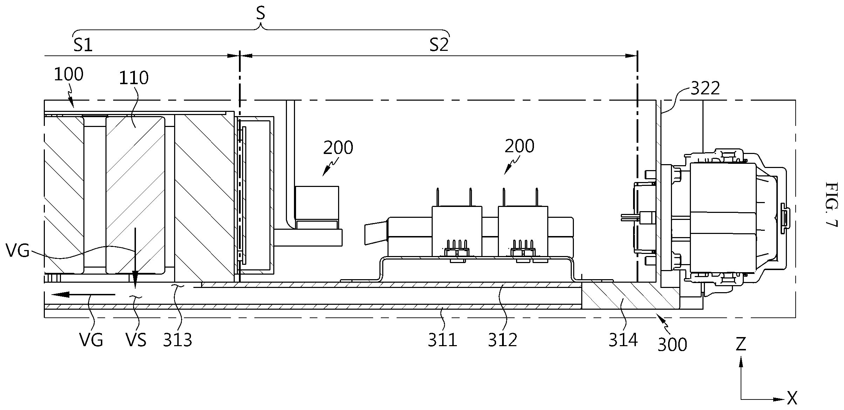

FIG. 5 is a cross-sectional view taken along line I - I' in FIG. 1, FIG. 6 is an enlarged cross-sectional view of part A in FIG. 5, and FIG. 7 is an enlarged cross-sectional view of part B in FIG. 5.

Hereinafter, the battery pack 10 according to an embodiment of the present disclosure will be further described in more detail with reference to FIGS. 5 to 7.

The bottom member 310 may include a first bottom 311 and a second bottom 312. The first bottom 311 and the second bottom 312 may be spaced apart from each other. The first bottom 311 and the second bottom 312 may be vertically spaced apart from each other. For example, the first bottom 311 may be disposed below (in the -Z-axis direction), and the second bottom 312 may be disposed above the first bottom 311 (in the +Z-axis direction) so as to be spaced apart from the first bottom 311. The venting space VS may be formed between the first bottom 311 and the second bottom 312 that are spaced apart from each other.

As described above, the structure, in which the bottom member 310 has the first bottom 311 and the second bottom 312 and in which the venting space VS is formed between the first bottom 311 and the second bottom 312, may form the venting space VS more reliably in the bottom member 310. In addition, the bottom member 310 may be effectively made lightweight, thereby improving the energy density of the battery pack 10.

An opening 313 may be formed in the second bottom 312. The opening 313 may be formed in a portion of the second bottom 312 corresponding to the first storage space S1. The cell array structure 100 may communicate with the venting space VS through the opening 313. That is, the venting gas VG discharged from the battery cell 110 of the cell array structure 100 may move to the venting space VS through the opening 313. The cell array structure 100 may be disposed to cover the opening 313 from above (the +Z-axis direction). The bottom side of the cell array structure 100 may be configured to be larger than the opening 313. The close-contact area CA may be the periphery of the opening 313 and provided to surround the perimeter of the opening 313. As the cell array structure 100 is in close contact with the close-contact area CA, the opening 313 may be isolated from the first storage space S1.

The bottom member 310 may have a blocking portion 314. The blocking portion 314 may be disposed at the side of the second storage space S2 in the bottom member 310. The portion of the bottom member 310 corresponding to the blocking portion 314 may not be empty inside but may be blocked. The blocking portion 314 may be positioned, for example, as shown in FIG. 7, adjacent to a second side wall 322, which will be described later, located on the opposite side of a venting device 400, which will be described later, in the pack case 300. The blocking portion 314 may extend from a second side wall 322, which will be described later, to the first storage space S1. The blocking portion 314 may not have a venting space VS formed therein. The blocking portion 314 may further effectively prevent the venting gas VG from flowing into the second storage space S2.

The cell array structure 100 may further include a filling member 120. The filling member 120 may be filled between the battery cells 110 and/or at the bottom of the battery cells 110. The filling member 120 may be formed by curing a material such as resin that is filled between the battery cells 110 and/or at the bottom of the battery cells 110. When a thermal event occurs in the cell array structure 100, the filling member 120 may effectively prevent thermal propagation or heat diffusion between the battery cells 110. The filling member 120 may increase the heat capacity of the cell array structure 100 to facilitate heat management and protect the battery cells 110. The filling member 120 may include a material having insulating properties or high heat capacity.

The filling member 120 may be in close contact with the close-contact area CA. Specifically, in a case where the filling member 120 fills the bottom of the cell array structure 100 to constitute the bottom of the cell array structure 100, the filling member 120 may be in close contact with the close-contact area CA. As described above, since the filling member 120 includes a material having insulation or high heat capacity, when the filling member 120 is in close contact with the close-contact area CA, isolation between the venting spaces VS or between the venting space VS and the second storage space S2 may be further reliably attained. In addition, since the filling member 120 may effectively prevent thermal propagation or heat diffusion between the battery cells 110, in the case where the cell array structure 100 includes the filling member 120, the occurrence of secondary thermal events may be prevented more effectively.

The cell array structure 100 may include a bottom sheet 121 at the lower surface. The bottom sheet 121 may prevent a material such as resin from leaking out to the area below the cell array structure 100 when it is filled. The bottom sheet 121 may be formed so thin that it may be broken when venting gas VG is discharged from the battery cell 110. The bottom sheet 121 may include a resin material.

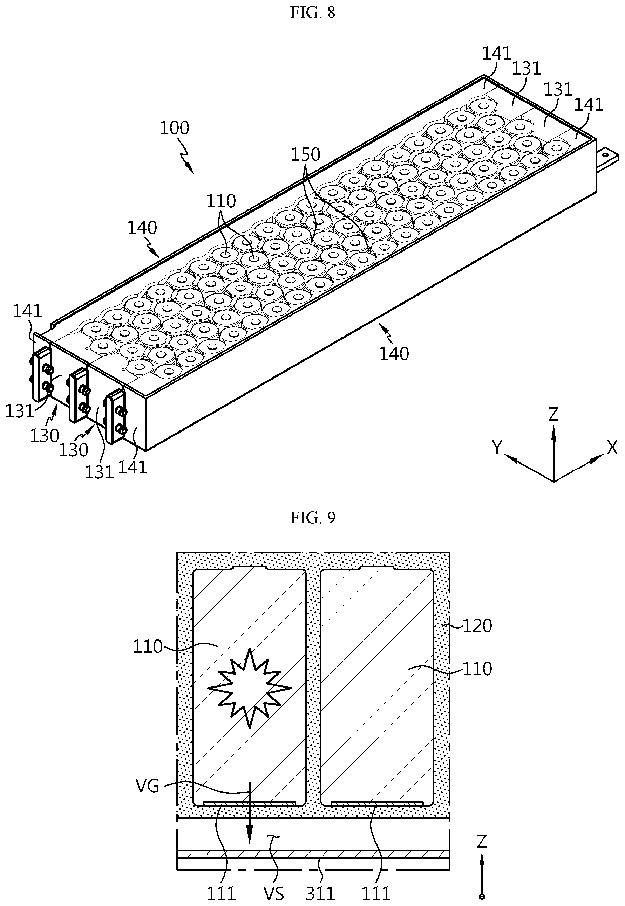

FIG. 8 is an exploded perspective view illustrating a cell array structure of a battery pack according to an embodiment of the present disclosure.

Hereinafter, the battery pack 10 according to an embodiment of the present disclosure will be described in more detail with reference to FIGS. 3, 4, and 8.

The cell array structure 100 of the battery pack 10 according to an embodiment of the present disclosure may further include side frames 130 and 140. The side frames 130 and 140 may support and store a plurality of battery cells 110.

The side frames 130 and 140 may be in close contact with the close-contact area CA. Specifically, the side frames 130 and 140 may form outer parts of the cell array structure 100, and the outer parts of the cell array structure 100 formed by the side frames 130 and 140 may be in close contact with the close-contact area CA.

When the side frames 130 and 140 is in close contact with the close-contact area CA, the cell array structure 100 may come into close contact with the close-contact area CA more easily, so that isolation between the venting space VS or between the venting space VS and the second storage space S2 may be attained more effectively.

The side frames 130 and 140 may have a side structure 130 and a side wall 140. The side structure 130 may support and store the battery cells 110 in both directions. For example, the side structure 130 may extend in the longitudinal direction (X-axis direction) of the cell array structure 100, and may have end portions 131 at both ends in the longitudinal direction. The side wall 140 may support and store the battery cells 110 in one direction. For example, the side wall 140 may extend in the longitudinal direction (X-axis direction) of the cell array structure 100, and may have end portions 141 at both ends in the longitudinal direction. The side wall 140 may be disposed at the outermost sides of the cell array structure 100, and the side structure 130 may be disposed between two side walls 140. The outer parts of the cell array structure 100 may be configured by the side walls 140 and the end portions 131 and 141.

The cell array structure 100 may further have a cooling unit 150 disposed between the battery cells 110 so as to cool the battery cells 110.

FIG. 9 is an enlarged cross-sectional view illustrating a battery cell of a battery pack according to an embodiment of the present disclosure.

Hereinafter, the battery pack 10 according to an embodiment of the present disclosure will be described in more detail with reference to FIGS. 3, 4, and 9.

The battery cell 110 of the battery pack 10 according to an embodiment of the present disclosure may have a venting unit 111. The venting unit 111 may be configured to be ruptured or melted when the internal pressure of the battery cell 110 abnormally increases due to a thermal event occurring in the battery cell 110, thereby opening the interior of the battery cell 110 and discharging venting gas VG to the outside. The venting unit 111 may be provided at the bottom of the battery cell 110. The venting unit 111 may be provided as a notch formed at the bottom of the battery cell 110.

The venting space VS may be disposed at the bottom of the battery cell 110. In the case of a vehicle equipped with the battery pack 10, a driver or passenger is generally positioned above the battery cells 110, and in this case, if venting gas VG is discharged to the upper side of the battery cells 110 during the aforementioned thermal event, it may pose a significant risk to the safety of the passenger. Therefore, as shown in the present disclosure, in a case where the venting unit 111 is provided at the bottom of the battery cell 110 and where the venting space VS is disposed at the bottom of the battery cell 110, the venting gas VG may be guided to the lower side opposite to the passenger.

Hereinafter, referring back to FIGS. 3 to 7, the bottom member 310 and the venting space VS according to an embodiment of the present disclosure will be described in more detail.

The venting space VS may be formed integrally with the bottom member 310. For example, the venting space VS may be formed integrally with the bottom member 310 so as to be recessed from the inner side of the bottom member 310. As described above, in a case where the venting space VS is formed integrally with the bottom member 310, the clearance that may be formed to provide the venting space VS may be minimized, so that the venting gas VG may be further effectively prevented from flowing into a space other than the venting space VS. In addition, the productivity of the venting space VS and the bottom member 310 may be improved.

The venting space VS may be formed as the bottom member 310 is extruded. When the venting space VS is formed in the bottom member 310 by extrusion, the venting space VS may be formed simultaneously when the bottom member 310 is manufactured, so that the productivity of the bottom member 310 may be improved. In addition, the durability of the bottom member 310 having the venting space VS may be improved.

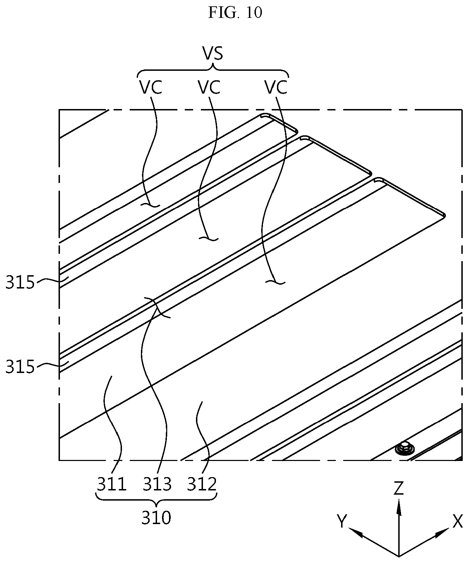

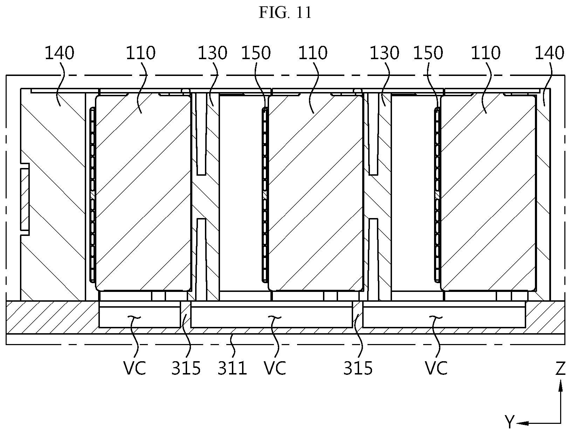

FIG. 10 is an enlarged perspective view of a portion of a bottom member of a battery pack according to an embodiment of the present disclosure, and FIG. 11 is a cross-sectional view illustrating a cell array structure of a battery pack according to an embodiment of the present disclosure.

Hereinafter, the battery pack 10 according to an embodiment of the present disclosure will be described in more detail with reference to FIG. 10 and FIG. 11.

One or more protrusions 315 may be disposed in the venting space VS. One or more protrusions 315 may form a plurality of venting channels VC in the venting space VS. The protrusions 315 may prevent the venting gas VG flowing in one venting channel VC from flowing into another venting channel VC. In addition, the protrusions 315 may guide the flow of the venting gas VG.

As previously discussed, the cell array structure 100 may further include one or more side structures 130. The protrusion 315 may be disposed at a position corresponding to the side structure 130. For example, the side structure 130 may be disposed above the protrusion 315 (in the +Z direction). Regarding this, in a case where the side structure 130 extends in the longitudinal direction (X-axis direction) of the cell array structure 100, the protrusion 315 may extend along the longitudinal direction of the side structure 130.

As described above, if the protrusion 315 is disposed at a position corresponding to the side structure 130, the battery cells 110 disposed on both sides of the side structure 130 may be further directly exposed to the venting channel VC. In addition, the venting gas VG flowing in one venting channel VC may be effectively prevented from flowing into another venting channel VC by being blocked by the protrusion 315 and the side structure 130 disposed at a position corresponding to the protrusion 315.

The protrusion 315 may be formed integrally with the first bottom 311. The protrusion 315 may be manufactured integrally with the first bottom 311 by extrusion molding.

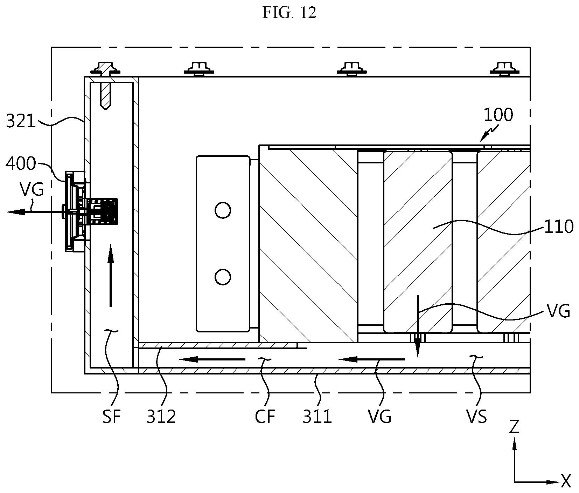

FIG. 12 is an enlarged cross-sectional view of part C in FIG. 5.

Hereinafter, the pack case 300 of the battery pack 10 according to an embodiment of the present disclosure will be described in more detail with reference to FIGS. 3 to 5 and FIG. 12.

The pack case 300 of the battery pack 10 according to an embodiment of the present disclosure may further include a venting device 400. The venting device 400 may be configured such that the venting gas VG flowing in the venting space VS may be discharged to the outside of the pack case 300. The venting device 400 may be configured in the form of a simple hole passing through the pack case 300. Unlike this, the venting device 400 may be configured to be completely open, or to be closed in a normal state and opened when there is a change in pressure or temperature inside the pack case 300.

As described above, in the case where the pack case 300 further includes the venting device 400, there is an advantage in which the venting gas VG flowing in the venting space VS may be smoothly discharged to the outside of the pack case 300.

The venting device 400 may be disposed on the side wall 320 of the pack case 300, which is far from the second storage space S2. Specifically, the pack case 300 may include side walls 320. The side walls 320 may be configured to be disposed at the sides of the pack case 300. The side walls 320 may be disposed to surround the bottom member 310, and a storage space S may be formed by the side walls 320 and the bottom member 310.

The side walls 320 may include a first side wall 321, a second side wall 322, and a third side wall 323. The first side wall 321 may refer to one of the side walls 320, which is disposed in the first storage space S1. The second side wall 322 may refer to one of the side walls 320, which is disposed in the second storage space S2. The first side wall 321 and the second side wall 322 may be disposed on opposite sides to face each other. The third side wall 323 may refer to one of the side walls 320, which is disposed between the first side wall 321 and the second side wall 322.

The venting device 400 may be disposed on the first side wall 321.

As described above, when the venting device 400 is disposed on the first side wall 321, which is the side wall 320 far from the second storage space S2 in the pack case 300, the venting gas VG may flow only in the first storage space S1 without moving to the second storage space S2, and may be smoothly discharged to the outside of the pack case 300.

A side path SF may be provided inside the side wall 320 on the side far from the second storage space S2 described above. That is, a side path SF may be formed inside the first side wall 321. The side path SF may communicate the venting device 400 with the plurality of venting spaces VS. The side path SF may be disposed between the venting device 400 and the plurality of venting spaces VS. Specifically, one end of the side path SF may be connected to the plurality of venting spaces VS, and the other end of the side path SF may be connected to the venting device 400.

When the side path SF is provided inside the first side wall 321, all of the venting gases VG flowing in the respective venting spaces VS may be effectively discharged to the outside through the venting device 400. In addition, since the pack case 300 is lightweight, the energy density of the battery pack 10 may be improved.

A connecting path CF may be further formed in the bottom member 310. The connecting path CF may connect the plurality of venting spaces VS and the side path SF to each other. That is, the connecting path CF may be disposed between the plurality of venting spaces VS and the side path SF. The plurality of venting spaces VS may merge in the connecting path CF. When the connecting path CF is further provided, the venting path of the venting gas VG may be expanded.

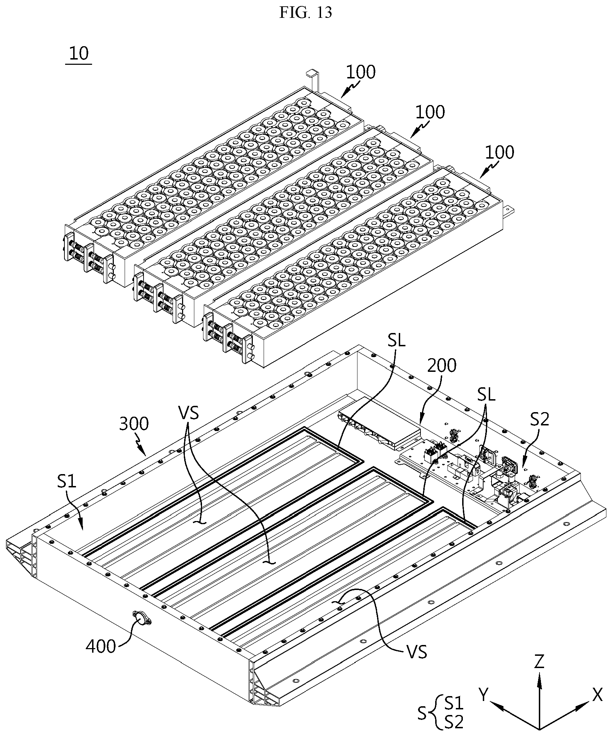

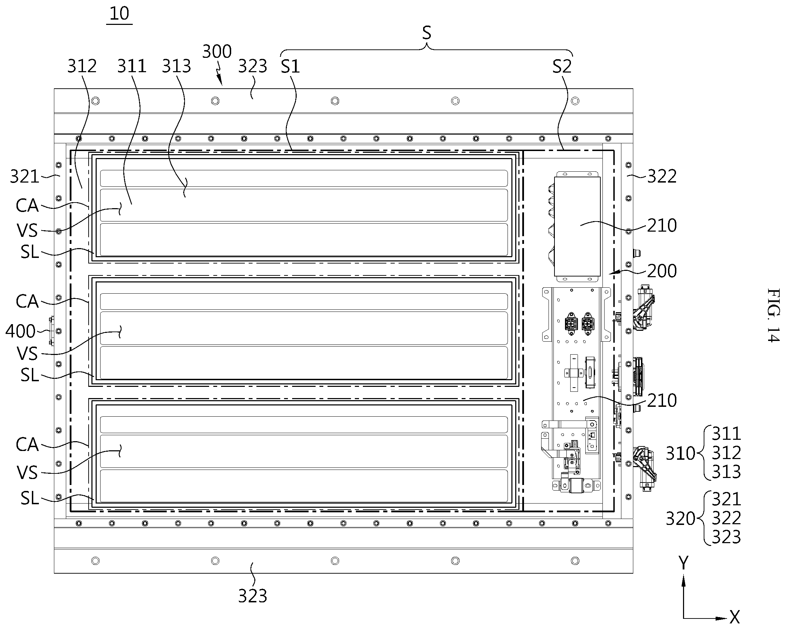

FIG. 13 is an exploded perspective view of a battery pack according to another embodiment of the present disclosure, and FIG. 14 is a plan view illustrating a battery pack from which a cell array structure is removed according to another embodiment of the present disclosure.

Hereinafter, a battery pack 10 according to another embodiment of the present disclosure will be described in detail with reference to FIGS. 13 and 14. The battery pack 10 according to another embodiment of the present disclosure may further include a sealing member SL.

The sealing member SL may be configured to seal the gap between the cell array structure 100 and the venting space VS that correspond to each other. The sealing member SL may be disposed in the close-contact area CA.

The sealing member SL may be provided in a form to surround the perimeter of the venting space VS. The sealing member SL may be disposed between a portion of the bottom member 310 corresponding to the perimeter of the venting space VS and the cell array structure 100 so as to be in close contact therewith.

Since the battery pack 10 according to another embodiment of the present disclosure further includes the sealing member SL, it is possible to more reliably ensure isolation between the venting spaces VS or between the venting space VS and the second storage space S2.

The sealing member SL may include a flame-retardant material. For example, the sealing member SL may include a silicone foam material having high flame retardancy. As described above, in the case where the sealing member SL includes a flame-retardant material, even if the sealing member SL is exposed to high-temperature venting gas VG, damage and deformation of the sealing member SL may be minimized, thereby ensuring isolation between the venting spaces VS or between the venting space VS and the second storage space S2.

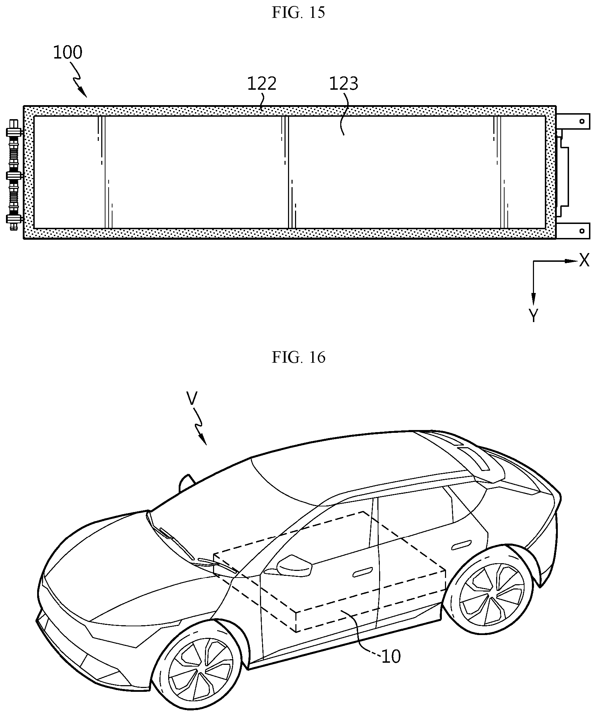

FIG. 15 is a bottom view illustrating a cell array structure according to another embodiment of the present disclosure.

Hereinafter, a battery pack 10 according to another embodiment of the present disclosure will be described in more detail with reference to FIG. 15.

As described above, the cell array structure 100 may further include the filling member 120. The filling member 120 may include an extension portion 122. The extension portion 122 may extend from one side of the cell array structure 100 toward the close-contact area CA. For example, the extension portion 122 may extend from the bottom of the cell array structure 100 toward the close-contact area CA. The extension portion 122 may configure a sealing member SL.

In a case where the cell array structure 100 further includes the filling member 120, and where the filling member 120 includes the extension portion 122, the isolation between the venting spaces VS or between the venting space VS and the second storage space S2 may be more reliably ensured. In addition, since the sealing member SL may be configured without a separate member, the productivity and energy density of the battery pack 10 may be improved.

The extension portion 122 may be formed along the edge of the bottom of the cell array structure 100, as shown in FIG. 15. In this case, a recessed portion 123 may be formed inside the extension portion 122 so that the filling member 120 is recessed.

Meanwhile, the battery pack 10 according to the present disclosure may further include various devices (e.g., the BMS described above), current sensors, fuses, or the like for controlling charging and discharging of the battery cells 110.

FIG. 16 is a drawing illustrating a vehicle according to an embodiment of the present disclosure.

Referring to FIG. 16, a battery pack 10 according to the present disclosure may be applied to a vehicle V such as an electric vehicle or a hybrid vehicle. That is, the vehicle V according to the present disclosure may include the battery pack 10 according to the present disclosure. The battery pack 10 may be installed in a body frame under the seat of the vehicle or in a trunk space. In addition, the vehicle V according to an embodiment of the present disclosure may further include various other components included in the vehicle, in addition to the battery pack 10. For example, the vehicle V according to an embodiment of the present disclosure may further include a car body, a motor, a control device such as an ECU (electronic control unit), or the like, in addition to the battery pack 10 according to an embodiment of the present disclosure.

In addition, it is obvious that the battery pack 10 according to an embodiment of the present disclosure may be provided in other devices, apparatuses, and facilities such as an energy storage system using a secondary battery, in addition to the vehicle V.

Although terms indicating directions such as up(ward), down(ward), left, right, front(ward), and back(ward) directions are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

### [Description of Reference numerals]

10: Battery pack
100: Cell array structure
110: Battery cell
111: Venting unit
120: Filling member
121: Bottom sheet
122: Extension portion
123: Recessed portion
130: Side structure
131: End portion
140: Side wall
141: End portion
150: Cooling unit
200: Electrical components
210: Electrical unit
220: CMC
230: Busbar
300: Pack case
310: Bottom member
311: First bottom
312: Second bottom
313: Opening
314: Blocking portion
315: Protrusion
320: Side wall
321: First side wall
322: Second side wall
323: Third side wall
400: Venting device
CA: Close-contact area
S: Storage space
S1: First storage space
S2: Second storage space
VS: Venting space
VG: Venting gas
VC: Venting channel
SL: Sealing member
CF: Connecting path
SF: Side path

## Claims

1. A battery pack comprising:
a plurality of cell array structures comprising a plurality of battery cells;
a pack case comprising a bottom member disposed on one side of the plurality of cell array structures, and having a first storage space where the plurality of cell array structures are stored and a second storage space where the cell array structure is not stored, which are formed on the bottom member; and
a plurality of venting spaces formed on the bottom member so as to correspond one-to-one with the plurality of cell array structures,
wherein a close-contact area is provided on a periphery of the venting space on the bottom member such that the cell array structures is in close contact therewith, and
wherein the plurality of venting spaces
are isolated from each other in the first storage space, and
are isolated from the second storage space.

2. The battery pack according to claim 1,
wherein the second storage space
is configured to store one or more electrical components.

3. The battery pack according to claim 1,
further comprising a filling member filled in the cell array structure,
wherein the filling member
is in close contact with the close-contact area.

4. The battery pack according to claim 1,
wherein the cell array structure
further comprises a side frame configured to support and store the battery cells, and
wherein the side frame
is in close contact with the close-contact area.

5. The battery pack according to claim 1,
wherein the battery cell
comprises a venting unit at its bottom, and
wherein the venting space is disposed at the bottom of the battery cell.

6. The battery pack according to claim 1,
wherein the venting space
is formed integrally with the bottom member.

7. The battery pack according to claim 1,
wherein the bottom member
comprises a first bottom and a second bottom that are spaced apart from each other, and
wherein the venting space
is formed between the first bottom and the second bottom.

8. The battery pack according to claim 1,
wherein the venting space
is formed by extrusion-molding the bottom member.

9. The battery pack according to claim 1,
wherein the venting space
has one or more protrusions disposed therein, and
wherein the one or more protrusions form a plurality of venting channels in the venting space.

10. The battery pack according to claim 9,
wherein the cell array structure
further comprises at least one side structure configured to support and store the battery cells in both directions, and
wherein the protrusion is disposed at a position corresponding to the side structure.

11. The battery pack according to claim 1,
wherein the pack case
further comprises a venting device communicating with the plurality of venting spaces and an outside.

12. The battery pack according to claim 11,
wherein the venting device
is disposed on a side wall far from the second storage space in the pack case.

13. The battery pack according to claim 12,
wherein the side wall
has a side path provided therein to communicate the venting device and the plurality of venting spaces with each other.

14. The battery pack according to claim 1,
further comprising a sealing member disposed in the close-contact area to seal a gap between the cell array structure and the venting space, which correspond to each other.

15. The battery pack according to claim 14,
wherein the sealing member
comprises a flame-retardant material.

16. The battery pack according to claim 14,
further comprising a filling member filled in the cell array structure,
wherein the filling member
comprises an extension portion extending from one side of the cell array structure toward the close-contact area, and
wherein the extension portion
constitutes the sealing member.

17. A vehicle comprising at least one battery pack according to any one of claims 1 to 16.
